(19) Europäisches Patentamt
European Patent Office
Office européen des brevets

(11) Publication number: **0 167 889**
**B1**

# (12) EUROPEAN PATENT SPECIFICATION

(45) Date of publication of patent specification: **19.10.88**

(51) Int. Cl.[4]: **C 08 G 18/42**, C 08 L 67/02 // (C08L67/02, 75:04)

(21) Application number: **85107519.2**

(22) Date of filing: **18.06.85**

## (54) Thermoplastic polyester molding composition having an improved impact performance.

(30) Priority: **29.06.84 US 626074**

(43) Date of publication of application:
**15.01.86 Bulletin 86/03**

(45) Publication of the grant of the patent:
**19.10.88 Bulletin 88/42**

(84) Designated Contracting States:
**DE FR GB IT**

(56) References cited:
**EP-A-0 158 263**
**DE-B-1 195 943**
**FR-A-2 124 567**
**FR-A-2 247 506**
**FR-A-2 316 283**

**CHEMICAL ABSTRACTS, vol. 91, no. 16, 15th October 1979, page 39, no. 124490h, Columbus, Ohio, US**

(73) Proprietor: **MOBAY CORPORATION**
**Mobay Road**
**Pittsburgh Pennsylvania 15205-9741 (US)**

(72) Inventor: **Kriek, George R.**
**2221 Superior Street**
**Bethel Park, PA 15102 (US)**
Inventor: **Chung, James Y.J.**
**44 Neubauer Drive**
**New Martinsville, WV 26155 (US)**
Inventor: **Reinert, Gerard E.**
**304 Friar Lane**
**McMurray, PA 15317 (US)**
Inventor: **Neuray, Dieter**
**1822 Tragone Drive**
**Pittsburgh, PA 15241 (US)**

(74) Representative: **Gremm, Joachim, Dr. et al**
**Bayer AG Konzernverwaltung RP**
**Patentabteilung**
**D-5090 Leverkusen, Bayerwerk (DE)**

**EP 0 167 889 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

## FIELD OF THE INVENTION

The present invention relates to thermoplastic molding compositions and more particularly to impact modified thermoplastic polyester compositions, to a process for the production thereof and to the use of said compositions for manufacturing molded articles.

## SUMMARY OF THE INVENTION

The invention relates to thermoplastic molding compositions comprising a blend of a thermoplastic polyester and a reinforcing amount of a reinforcing agent. An improvement in the impact performance of the compositions is disclosed to result upon the incorporation therewith of a blocked (end-capped) polyisocyanate prepolymer.

## BACKGROUND OF THE INVENTION

Molding compositions consisting of glass fiber reinforced thermoplastic polyester are known. Representative of the relevant published information are U.S. Patents 4,013,613 and 4,123,415. Further relevant in the present context is U.S. Patent 4,110,302 which describes a process for producing reinforced polybutylene terephthalate compositions entailing modifying the resin by reacting therewith, in the molten state, a polycarbodiimide which is derived from an aromatic diisocyanate. The compositions thus produced are noted for their improved impact strength.

French patent application 2 247 506 deals with filler-reinforced polybutylene terephthalate compositions comprising a thermoplastic polyurethane and/or a polyamide and optionally a polyisocyanate. An advantage of the optional polyisocyanate additives is not disclosed.

Chem. Abstracts *91*, 124 490 h (1979) makes references to Japanese patent application 79 60.395 which refers to compositions comprising polybutylene terephthalate and diisocyanate which compositions are melt-blended to yield compositions for extrusion or blow-moulding. An Izod notched impact strength of 5.5 kg cm/cm is disclosed.

German Auslegeschrift No. 11 95 943 discloses a process for manufacturing films having a high E-modulus by reacting in the melt aromatic, linear polyesters with equivalent amounts of blocked diisocyanates and by subsequent extrusion.

Polyisocyanate prepolymers which are suitable in their end-capped configuration as a synergist in the context of the present invention are described generally in U.S. Patent 4,292,226. Also, end-capped, i.e. blocked, isocyanates were described in "Polyisocyanates, Chemistry and Technology" by Saunders and Frisch, Interscience Publishers, New York, London, 1962, pages 118—121, and in "New Developments in the Field of Blocked Isocyanates, II" by Z. W. Wicks, Jr., published in Prog. Org. Coat., 1981, 9(1) pages 3—28.

In the earlier European patent application 158 263 which is only a document under Article 54 (3) EPC a thermoplastic molding composition is disclosed comprising the extrudate of a blend of (i) 70—95% by weight of a thermoplastic polyester, and (ii) 5—30% by weight of an impact modifier, the glass transition temperature of its elastomeric phase being below 20°C, said percent being relative to the sum (i) + (ii), and 0.5 to 8% by weight of blocked polyisocyanate prepolymer, said percent being relative to the sum (i) + (ii). Said thermoplastic molding composition has an improved level of impact strength.

## DETAILED DESCRIPTION OF THE INVENTION

The invention provides blends extruded at a temperature of from 200 to 330°C, consisting of

(I) polyethylene terephthalate having an intrinsic viscosity of at least 0.4 gl/g (determined as a 1% by weight solution in a 60:40 (by weight) mixture of phenol and tetrachloroethane at 30°C),

(II) from 5 to 60% by weight, relative to the sum (I) + (II), of reinforcing agent selected from the group consisting of metals, carbon, asbestos, metal oxides, metal silicates, and glass,

(III) from 0.5 to 8% by weight, relative to (I), polyisocyanate prepolymer having an average isocyanate functionality of from 1.8 to 2.2 and a number average molecular weight of from 500 to 20 000, capped by a blocking agent, and optionally

(IV) stabilizers, mold release agents, crystallization promoters, dyes, pigments, flame retardants and fillers with the proviso, that the fillers do not comprise a rubbery impact modifier having a glass transition temperature of below 20°C.

The invention further provides a process for the production of said blends by extruding compositions comprising components (I), (II), (III) and optionally (IV) at a temperature of from 200 to 330°C.

A further object of the invention is the use of said blends for manufacturing molded articles.

### Thermoplatic Polyester

The dicarboxylic acid component of the thermoplastic polyester (I) consists mainly of terephthalic acid and may contain up to 10 mol-%, based on the total mols of acid, of other aromatic or ar-aliphatic dicarboxylic acids having from 8 to 16 carbon atoms, of aliphatic dicarboxylic acids having from 4 to 10 carbon atoms or of cycloaliphatic dicarboxylic acids having from 8 to 12 carbon atoms. Examples of such dicarboxylic acids which may be co-condensed with terephthalic acid are phthalic acid, isophthalic acid,

naphthalene-2,6-dicarboxylic acid, diphenyl-4,4'-dicarboxylic acid, adipic acid, sebacic acid and cyclohexanediacetic acid.

The diol component of the thermoplastic polyester (I) consists mainly of ethylene glycol. It may, however, contain up to 10 mol %, based on the glycol units, of units of aliphatic diols having from 3 to 12 carbon atoms, of cycloalipahtic diols having from 6 to 15 carbon atoms or of aromatic or of ar-aliphatic diols having from 6 to 21 carbon atoms. Examples of such additional diols ("codiols") include propane-1,3-diol, pentane-1,5-diol, hexane-1,6-diol, decamethylene glycol, cyclohexane diols, or cyclohexane-1,4-dimethanol, 3-methyl-pentanediol-(2,4), 2-methylpentanediol-(1,4), 2,2,4-trimethylpentanediol-(1,3), 2-ethylhexanediol-(1,3), 2,2-diethyl propanediol-(1,3), hexanediol-(1,3), 1,4-di-(β-hydroxyethoxy)-benzene, 2,2-bis-(4-hydroxycyclohexyl)-propane, 2,4-dihydroxy-1,1,3,3-tetramethyl-cyclobutane, 2,2-Bis-(3-β-hydroxyethoxyphenyl)-propane and 2,2-bis-(4-hydroxypropoxyphenyl)-propane.

The thermoplastic polyesters can be branched by co-condensing relatively small amounts of trihydric or tetrahydric alcohols or tribasic or tetrabasic acids, as described in German Offenlegungsschrift No. 1,900,270 and in U.S. Patent No. 3,692,744. Examples of suitable branching agents include trimellitic acid, trimesic acid, pyromellitic acid, trimethylolpropane and -ethane, and pentaerythritol. It is advisable not to use more than 1 mol % of branching agent, based on the quantity of dicarboxylic acid component.

Polyethylene terephthalates derived mainly from terephthalic acid (or its derivatives) and ethylene glycol are preferred and homopolyethylene terephthalate, i.e. a product produced substantially only from ethylene glycol and terephthalic acid or its esters or its dichloride, is most preferred.

The thermoplastic polyesters of the compositions in accordance with the invention are characterized in that their intrinsic viscosity (I.V.) is at least 0,4 and preferably 0.5 to 1.6 dl/g, more preferably 0.6 to 1.2 dl/g, measured as a 1% by weight solution in a 60:40 (by weight) mixture of phenol and tetrachloroethane at 30°C. These polyesters are available commercially or can be prepared by known means such as by the alcoholysis of dialkyl esters of at least one dicarboxylic acid with glycols followed by polycondensation, by heating the glycols with the free dicarboxylic acids or with their dihalides and similar processes such as are described among others in U.S. Patents 2,465,319 and 3,047,539.

Blocked (Capped) Polyisocyanate Prepolymers (III)

Polyisocyanate prepolymers suitable in their end capped configuration as a synergist in the present invention are generally described in U.S. 4,292,226.

Accordingly, suitable starting materials for producing the NCO-prepolymers are:

1. Any organic polyisocyanates, preferably diisocyanates, corresponding to the formula

$$Q(NCO)_n$$

in which

$n$ = 2 to 4, preferably 2, and

Q represents a saturated alipahtic hydrocarbon radical containing from 2 to 18, preferably from 6 to 10 carbon atoms, a saturated cycloaliphatic hydrocarbon radical containing from 4 to 15, preferably from 6 to 10 carbon atoms, an aromatic hydrocarbon radical containing from 6 to 15, preferably from 6 to 13 carbon atoms or an arylaliphatic hydrocarbon radical containing from 8 to 15, preferably from 8 to 13 carbon atoms, at least 2 carbon atoms being arranged between the NCO-groups in each case.

Examples of preferred polyisocyanates, particularly diisocyanates, are tetramethylene diisocyanate, hexamethylene diisocyanate, dodecamethylene diisocyanate, cyclobutane-1,3-diisocyanate, cyclohexane-1,3- and -1,4-diisocyanate and mixtures of these isomers, 1-isocyanato-3,3,5-trimethyl-5-isocyanatomethyl cyclohexane (IPDI), 2,4- and 2,6-hexahydrotoluene diisocyanate and mixtures of these isomers, hexahydro-1,3- and/or 1,4-phenylene diisocyanate, perhydro-2,4'- and/or -4,4-diphenyl methane diisocyanate, 1,3- and 1,4-bis-(isocyanatomethyl)-cyclohexane and 1,3- and 1,4-bis-(2-isocyanato-2-propyl)benzene, 1,3- and 1,4-phenylene diisocyanate, 2,4- and 2,6-toluene diisocyanate and mixtures of these isomers, diphenyl methane-2,4'- and/or -4,4'-diisocyanates and naphthalene-1,5-diisocyanate. It is of course also possible to use mixtures of these isocyanates. Small quantities of mono- and triisocyanates may also be used. It is also possible to use the modified polyisocyanates known per se in polyurethane chemistry, i.e. polyisocyanates containing for example carbodiimide groups, allophanate groups, isocyanurate groups, urethane groups and/or biuret groups, in the process according to the invention, although this is not preferred.

Particularly preferred polyisocyanates are hexamethylene diisocyanate, 1-isocyanato-3,3,5-trimethyl-5-isocyanatomethyl cyclohexane, diphenyl methane-4,4'-diisocyanate, dicyclohexyl methane-4,4'-diisocyanate, 2,4- and 2,6-toluene diisocyanate and mixtures thereof.

2. Any organic compounds containing at least two isocyanate-reactive groups, more particularly organic compounds containing a total of two amino groups, thiol groups, carboxyl groups and/or hydroxyl groups and having molecular weights (weight average) in the range from 60 to 10,000 and preferably in the range from 300 to 4,000. The corresponding dihydroxyl compounds are preferably used. The use of compounds with a functionality of three of higher in the isocyanate polyaddition reaction in small quantities in order to obtain a certain degree of branching is also possible, as is the above-mentioned possible use of trifunctional or more highly functional polyisocyanates for the same purpose.

Preferred hydroxyl compounds are the hydroxy polyesters, hydroxy polyesters, hydroxy polyethers, hydroxy polythioethers, hydroxy polyacetals, hydroxy polyolefins, hydroxy polybutadienes, hydroxy polycarbonates and/or hydroxy polyester amides known per se in polyurethane chemistry.

Suitable polyesters containing hydroxyl groups are, for example, reaction products of polyhydric, preferably dihydric and, optionally, trihydric alcohols with polybasic, preferably dibasic, carboxylic acids. Instead of using a free polycarboxylic acid, it is also possible to use the corresponding polycarboxylic acid anhydrides or corresponding polycarboxylic acid esters of lower alcohols or mixtures thereof for producing the polyesters. The polycarboxylic acids may be aliphatic, cycloaliphatic, aromatic and/or heterocyclic and may be substituted, for example by halogen atoms, and/or unsaturated. Examples of polycarboxylic acids such as these are succinic acid, adipic acid, suberic acid, azelaic acid, sebacic acid, phthalic acid, isophthalic acid, trimellitic acid, phthalic acid anhydride, tetrahydrophthalic acid anhydride, hexahydrophthalic acid anhydride, tetrachlorophthalic acid anhydride, glutaric acid anhydride, maleic acid, maleic acid anhydride, fumaric acid, dimeric and trimeric fatty acids, such as oleic acid, which may be used in admixtures with monomeric fatty acids, terephthalic acid dimethylester, terephthalic acid-bis-glycol ester. Suitable polyhydric alcohols are for example ethylene glycol, 1,2- and 1,3-propylene glycol, 1,4- and 1,3-butylene glycol, 1,6-hexane diol, 1,8-octane diol, neopentyl glycol, 1,4-bis-(hydroxymethyl)-cyclohexane, 2-methyl-1,3-propane diol, glycerol, trimethylol propane, 1,2,6-hexane triol, 1,2,4-butane triol, trimethylol ethane, pentaerythritol, quinitol, mannitol and sorbitol, methyl glucoside, also diethylene glycol, triethylene glycol, tetraethylene glycol, polyethylene glycols, dipropylene glycol, polypropylene glycols, dibutylene glycol and polybutylene glycols. The polyesters may contain terminal carboxyl groups. Polyesters of lactones, for example ε-caprolactone, or hydroxy carboxylic acids, for example ω-hydroxy caproic acid, may also be used.

The polyethers suitable for use in accordance with the invention, preferably containing two hydroxyl groups are also known per se and are obtained for example by polymerizing epoxides, such as ethylene oxide, propylene oxide, butylene oxide, tetrahydrofuran, styrene oxide or epichlorohydrin, on their own, for example, in the presence of boron trifluoride, or by the addition of these epoxides, either in admixture or successively, with starting components containing reactive hydrogen atoms, such as alcohols and amines, for example water, ethylene glycol, 1,3- or 1,2-propylene glycol, 4,4'-dihydroxy diphenyl propane or aniline.

Polyethers modified by vinyl polymers of the type formed for example by polymerizing styrene, acrylonitrile in the presence of polyethers as described in U.S. Patent Nos. 3,383,511; 3,304,273; 3,523,093; and 3,110,695, and German Patent No. 1,151,536 are also suitable. The more highly functional polyethers which may also be proportionately used are similarly obtained in known manner by alkoxylating starter molecules of relatively high functionality, for example, ammonia, ethanolamine, ethylene diamine or sucrose.

Among the polythioethers, particular reference is made to the condensation products of the thiodiglycol on its own and/or with other glycols, dicarboxylic acids, formaldehyde, aminocarboxylic acids or aminoalcohols. Depending on the co-components, the products in question are polythio mixed ethers, polythio ether esters, polythio ether ester amides.

Suitable polyacetals are, for example, the compounds obtainable from glycols, such as diethylene glycol, triethylene glycol, 4,4'-diethoxy diphenyl dimethyl methane, hexane diol and formaldehyde. Polyacetals suitable for use in accordance with the invention may also be obtained by polymerizing cyclic acetals.

Suitable polycarbonates containing hydroxyl groups are known per se and may be obtained for example by reacting diols, such as 1,3-propane diol, 1,4-butane diol and/or 1,6-hexane diol, diethylene glycol, triethylene glycol, tetraethylene diol, with diaryl carbonates, for example diphenyl carbonate, or phosgene.

The polyester amides and polyamides include for example the predominantly linear condensates obtained from polybasic saturated and unsaturated carboxylic acids or their anhydrides and polyhydric saturated and unsaturated amino alcohols, diamines, polyamines and their mixtures. Polyhydroxyl compounds already containing urethane or urea groups may also be used.

It is also possible to use low molecular weight polyols such as, for example, ethane diol, 1,2- and 1,3-propane diols, 1,4- and 1,3-butane diol, pentane diols, hexane diols, trimethylol propane, hexane triols, glycerol and pentaerythritol. Monofunctional alcohols, such as stearyl alcohol for example, may also be used in small quantities.

Representatives of the above-mentioned polyisocyanate and hydroxyl compounds suitable for use in the process according to the invention are described, for example, in High Polymers, Vol. XVI, "Polyurethanes, Chemistry and Technology" by Saunders-Frisch, Interscience Publishers, New York, London, Volume I, 1962, pages 32 to 42 and pages 44 to 54, and Volume II, 1964, pages 5 to 6 and 198 to 199, and also in Kunststoff-Handbuch, Volume VII, Vieweg-Höchtlen, Carl Hanser-Verlag, Munich, 1966, for example on pages 45 to 71.

Further, U.S. 3,756,992 and U.S. 3,479,310 provide added information respecting the preparation of suitable polyurethane prepolymers which upon capping are useful in the present context.

Preferred polyurethane prepolymers have a number average molecular weight of from 800 to 9,000.

Capped, or blocked, isocyanates are described, for instance in "Polyurethanes, Chemistry and

Technology" by Saunders and Frisch, 1962, — see especially pages 118—121 and in New Developments in the Field of Blocked Isocyanates II by Zeno W. Wicks, Jr., Polymers and Coatings Department, North Dakota State University, Fargo, North Dakota, Prog. Org. Coat., 1981 9 (1) 3—28.

Blocking agents suitable for use in the process according to the invention are compounds with preferably one isocyanate-reactive group which enter into an addition reaction wth organic isocyanates at temperatures above 50°C and preferably at temperatures in the range of from 60° to 100°C, and whose resulting addition products, in admixture with involatile polyols containing primary hydroxyl groups, react with the involatile polyols to form urethanes at temperatures in the range of from 100° to 200°C, the reaction being accompanied by liberation of the blocking agent. Suitable blocking agents of this type are, for example, secondary or tertiary alcohols, such as iopropanol or tert.-butanol, C—H-acid compounds, such as malonic acid dialkyl esters, acetyl acetone, acetoacetic acid alkyl esters, oximes, such as formaldoxime, acetaldoxime, methyl ethyl ketone oxime, cyclohexanon oxime, acetophenone oxime, benzophenone oxime or diethyl glyoxime, lactams, such as ε-caprolactam, δ-valerolactam, γ-butyrolactam, phenols, such as phenol, o-methyl phenol, N-alkyl amides, such as N-methyl acetamide, imides, such as phthalimide, imidazole, alkali metal bisulphites and trialkyl ammonium bisulphites.

The preferred blocking (or capping) agents are cyclic 1,3-diketones, for example 1,3-cyclohexanedione, hydroxamic acid esters, benzotriazole, imidazole oxime, 2-butanone oxime, alcohols, phenol, hydroxy substituted nitrogen compounds such as N-hydroxy phthalimide, in particular ε-caprolactam.

A particularly preferred blocked (capped) prepolymer is an ε-caprolactam capped TDI-polyurethane prepolymer.

In preparing the composition of the invention, a blend is prepared from 0.5 to 8, preferably 1.0 to 5.0, % by weight, based on polyester, of the end-blocked (capped) polyisocyanate prepolymer.

Reinforcing Agents

Reinforcing agents are an essential component in the composition of the invention. A reinforcing amount, i.e. 5 to 60 percent by weight, preferably 10 to 50 percent by weight, relative to the weight of the polyester and the reinforcement, of a reinforcing agent is used. Generally, the reinforcing agent may be fibers, whiskers or platelets of metals, carbon, asbestos, metal oxides and metal silicates and glass. Among the metals, aluminum, iron and nickel may be mentioned. Glass fibers are the preferred reinforcing agents. Glass fiber reinforcements are well known and are available readily in commerce. Among the available varieties are "E-Glass" and "C-glass" which differ from one another in terms of their respective chemical compositions; both are suitable in the present context. For the most preferred embodiments, the reinforcement is provided by filaments having a diameter of from 7 to 15 μm. Neither the form of the filamentous reinforcment nor the length and diameter of the individual filaments are critical in the present context, generally, however, chopped strands shorter than 6 mm are beneficially used.

The thermoplastic resin composition of this invention may be prepared by uniformly mixing the components, using any desired means such as a Banbury mixer, a hot roll or an extruder. The mixture can be extruded and pelletized in a known manner, and is suitable for injection molding into a variety of useful articles. The composition may contain additives selected from the group consisting of stabilizers, mold release agents, crystallization promoters, dyes and pigments, flame retardants and fillers. It is understood that the fillers which can be added to the composition do not embrace the aforementioned reinforcing agents.

The invention is further illustrated, but is not intended to be limited by the following examples in which all parts and percentages are by weight, unless otherwise specfied.

EXAMPLES

The preparation of an ε-caprolactam capped TDI-polyisocyanate prepolymer suitable in the present context was carried out as follows:

The polyol components (302 parts by weight of a 2000 avg. MW difunctional polypropylene oxide, 157 parts by weight of a 3000 avg. MW — glycerin initiated trifunctional polypropylene oxide and 232.3 parts by weight of a 4800 avg. MW glycerin initiated polyether polyol containing both propylene oxide and ethylene oxide units) and 1.66 parts by weight of trimethylol propane and 106.8 parts of TDI (a mixture of 80% of 2,4-isomer and 20% of the 2,6-isomer) were mixed and heated with continued stirring to 70—75°C. The mixture was allowed to react until the NCO content was just below the theoretical level (3.0 %) which reaction took about 7 hours. 81.4 parts by weight of ε-caprolactam were then charged and the mixture was heated with stirring to 80—85°C and allowed to react until no free isocyanate was detected by infrared spectroscopy, which reaction time was about 8 hours. The product was characterized in that its blocked NCO content was 2.6% and its viscosity, at 25°C was 55,000 mPa.s.

Compositions in accordance with the present invention were prepared and their properties determined. The preparation of the molding compositions entailed blending of the dried components (dried at 95°C overnight) and extrusion (50.8 mm vented extruder; temperature profile — rear to front, °C — 280, 280, 270, 260, 250, 270, 270; compression ratio 2.75:1; screw speed 90 rpm). Injection molding of the samples was carried out using a Newbury 113.4 g machine, at the following molding conditions:

| | | |
|---|---|---|
| zone set temperature | rear | 260°C |
| | front | 260°C |
| | nozzle | 254°C |
| | mold | (95—121°C) |
| cycle time | 25 seconds | |

no back pressure.

The table shown below summarizes the properties and compositional makeup of a composition prepared in accordance with the present invention in comparison to a composition prepared without using a blocked isopropanate prepolymer.

The compositions, based on polyethylene terephthalate having an intrinsic viscosity of 0.6 dl/g, all contained glass fibers having a nominal fiber diameter of about 10 µm, as the reinforcing agent. The blocked polyisocyanate prepolymer used in the preparation of the composition 2 was ε-caprolactam capped TDI-polyisocyanate prepolymer, the preparation of which was described above. In addition to these essential compounds, the compositions described below contained the following components which presence is not critical to the invention (the amounts are in percent relative to the weight of the composition): 0.1% of an antioxidant (octadecyl-3-(3',5'-di-tert-butyl-4'-hydroxyphenyl)-propionate), 0.1% of tris-[(3-ethyloxetanyl-3)methyl]-phosphite as thermal stabilizer, 0.1% of a hydrolysis stabilizer conforming structurally to the formula

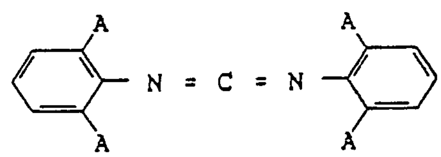

where A is

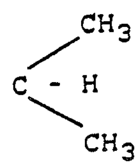

0.5% of an epoxy compound and 0.2% of talc. These are represented in the table as "stabilizers".

| Example | 1 | 2 |
|---|---|---|
| | (comparison) | |
| Components (%) | | |
| polyethylene terephthalate | 68.9 | 64.1 |
| glass fibers | 30.0 | 30.0 |
| stabilizers | 1.1 | 1.1 |
| Blocked polyisocyanate prepolymer | — | 4.8 |
| Impact strength, Izod 3.2 mm | | |
| (J/m) notched | 86.1 | 136 |
| (J/m) unnotched | 1056 | 1108 |

**Claims**

1. Blends, extruded at a temperature of from 200 to 330°C, consisting of

(I) polyethylene terephthalate having an intrinsic viscosity of at least 0.4 dl/g (determined as a 1% by weight solution in a 60:40 (by weight) mixture of phenol and tetrachloroethane at 30°C),

(II) from 5 to 60% by weight, relative to the sum (I) + (II), of reinforcing agent selected from the group consisting of metals, carbon, asbestos, metal oxides, metal silicates, and glass,

(III) from 0.5 to 8% by weight, relative to (I), of polyisocyanate prepolymer having an average isocyanate functionality of from 1.8 to 2.2 and a number average molecular weight of from 500 to 20 000, capped by a blocking agent, and optionally

(IV) stabilizers, mold release agents, crystallization promoters, dyes, pigments, flame retardants and fillers with the proviso, that the fillers do not comprise a rubbery impact modifier having a glass transition temperature of below 20°C.

2. The blend of Claim 1, wherein said reinforcing agent is glass fibers.

3. The blend of Claims 1 and 2, wherein said polyisocyanate prepolymer is derived from (a) an organic polyisocyanate corresponding to the formula

$$Q(NCO)_n$$

wherein n is 2—4 and Q denotes a $C_2$—$C_{18}$ saturated aliphatic hydrocarbon radical, a $C_4$—$C_{14}$ saturated cycloaliphatic hydrocarbon radical, a $C_6$—$C_{15}$ aromatic hydrocarbon radical or a $C_8$—$C_{15}$ arylaliphatic hydrocarbon radical with the proviso that at least 2 carbon atoms are present between the NCO-groups in each case and (b) an organic compound containing at least two isocyanate-reactive groups characterized in that its molecular weight is from 60 to 10,000.

4. The blend of Claim 3 wherein said isocyanate-reactive groups are selected from the group consisting of amino, thiol, carboxyl and hydroxyl radicals.

5. The blend of Claim 3 wherein said (b) is a hydroxyl compound selected from the group consisting of hydroxy polyesters, hydroxy polyethers, hydroxy polyolefins, hydroxy polybutadienes, hydroxy polycarbonates and hydroxy polyester amides.

6. The blend of Claims 1 to 5 wherein said polyisocyanate prepolymer is ε-caprolactam blocked.

7. A process for preparing the blends of Claims 1 to 6 by extruding a blend containing components (I), (II), (III) and optionally (IV) at temperatures from 200 to 330°C.

8. Use of the blends of Claims 1 to 6 for manufacturing molded articles.

**Patentansprüche**

1. Bei einer Temperatur von 200°C bis 330°C extrudiertes Gemisch, bestehend aus

(I) Polyethylenterephthalate mit einer Grenzviskosität von wenigstens 0,4 dl/g (bestimmt an einer Lösung von 1 Gew.-% in einer Mischung von 60:40 Gew.-Anteilen Phenol und Tetrachloroethan bei 30°C),

(II) 5 bis 60 Gew.-%, bezogen auf die Summe aus (I) + (II), eines aus der aus Metallen, Kohlenstoff, Asbest, Metalloxiden, Metallsilicaten und Glas bestehenden Gruppe ausgewählten Verstärkungsmittels,

(III) 0,5 bis 8 Gew.-%, bezogen auf (I), eines Polyisocyanat-Prepolymers mit einer mittleren Isocyanat-Funktionalität von 1,8 bis 2,2 und einem Zahlenmittel des Molekulargewichts von 500 bis 20 000, das mit einem Blockierungsmittel verkappt ist, und gegebennenfalls

(IV) Stabilisatoren, Formentrennmitteln, Kristallisationsförderern, Farbstoffen, Pigmenten, Flammverzögerungsmitteln und Füllstoffen, mit der Maßgabe, daß die Füllstoffe keinen kautschukartigen Schlagfestmacher mit einer Glasübergangstemperatur von weniger als 20°C enthalten.

2. Gemisch nach Anspruch 1, worin das Verstärkungsmittel Glasfasern sind.

3. Gemisch nach den Ansprüchen 1 und 2, worin das Polyisocyanat-Prepolymer abgeleitet ist von

(a) einem organischen Polyisocyanat, das der Formel

$$Q(NCO)_n$$

entspricht, in der n 2 bis 4 ist und Q einen gesättigten aliphatischen $C_2$—$C_{18}$-Kohlenwasserstoff-Rest, einen gesättigten cycloaliphatischen $C_4$—$C_{15}$-Kohlenwasserstoff-Rest, einen aromatischen $C_6$—$C_{15}$-Kohlenwasserstoff-Rest oder einen arylaliphatischen $C_8$—$C_{15}$-Kohlenwasserstoff-Rest bezeichnet, mit der Maßgabe, daß in jedem Fall wenigstens 2 Kohlenstoff-Atome zwischen den NCO-Gruppe vorhanden sind, und

(b) einer organischen Verbindung, die wenigstens zwei gegenüber Isocyanat reaktionsfähige Gruppen enthält und durch ein Molekulargewicht von 60 bis 10 000 gekennzeichnet ist.

4. Gemisch nach Anspruch 3, worin die gegenüber Isocyanat reaktionsfähigen Gruppen aus der aus Amino-, Thiol-, Carboxyl- und Hydroxyl-Resten bestehenden Gruppe ausgewählt sind.

5. Gemisch nach Anspruch 3, worin (b) eine Hydroxyl-Verbindung ist, die aus der aus Hydroxypolyestern, Hydroxypolyethern, Hydroxypolyolefinen, Hydroxypolybutadienen, Hydroxypolycarbonaten und Hydroxypolyesteramiden bestehenden Gruppe ausgewählt ist.

6. Gemisch nach den Ansprüchen 1 bis 5, worin das Polyisocyanat-Prepolymer durch ε-Caprolactam blockiert ist.

7. Verfahren zur Herstellung der Gemische nach den Ansprüchen 1 bis 6 durch Extrudieren eines die Komponenten (I), (II), (III) und gegebenenfalls (IV) enthaltenden Gemischs bei Temperaturen von 200°C bis 330°C.

8. Verwendung der Gemische nach den Ansprüchen 1 bis 6 zur Fertigung von Formteilen.

**Revendications**

1. Mélanges extrudés à une température de 200 à 330°C, consistant en

(I) du poly(téréphtalate d'éthylène) ayant une viscosité intrinsèque au moins égale à 0,4 dl/g (déterminée dans le cas d'une solution à 1% en poids dans un mélange à 60:40 (en poids) de phénol et de tétrachloréthane à 30°C),

(II) de 5 à 60% en poids, par rapport à la somme de (I) + (II), d'un agent d'armature choisi dans l'ensemble constitué par les métaux, le carbone, l'amiante, les oxydes de métaux, les silicates de métaux et le verre,

(III) de 0,5 à 8% en poids, par rapport à (I), d'un prèpolymère de polyisocyanate ayant une fonctionnalité isocyanate moyenne de 1,8 à 2,2 et un poids moléculaire moyen en nombre de 500 à 20 000, coiffé par un agent de blockage, et, éventuellement,

(IV) des stabilisants, des agents de démoulage, des promoteurs de cristallisation, des colorants, des pigments, des agents de retard de la propagation d'une flamme et des charges, à la condition que les charges ne comprennent pas un modificateur caoutchouteux de résistance au choc ayant une température de transition vitreuse inférieure à 20°C.

2. Mélange de la revendication 1, dans lequel l'agent d'armature est constitué par des fibres de verre.

3. Mélange de la revendications 1 et 2, dans lequel ledit prépolymère de polyisocyanate provient de (a) un polyisocyanate organique correspondant à la formule

$$Q(NCO)_n$$

dans laquelle n vaut 2 à 4 et Q représente un radical hydrocarboné aliphatique saturé $C_2$ à $C_{18}$, un radical cycloaliphatique saturé en $C_4$ à $C_{15}$, un radical hydrocarboné aromatique en $C_6$ à $C_{15}$ ou un radical hydrocarboné arylaliphatique en $C_8$ à $C_{15}$, à la condition qu'au moins deux atomes de carbone soient présents dans chaque cas entre les groupes NCO, et (b) d'un composé organique contenant au moins deux groupes pouvant réagir avec les isocyanates et caractérisé en ce que son poids moléculaire est compris entre 60 et 10 000.

4. Mélange de la revendication 3, dans lequel lesdits groupes pouvant réagir avec les isocyanates sont choisis parmi des radicaux amino, thiol, carboxyle et hydroxyle.

5. Mélange de la revendication 3, dans lequel ledit composé (b) est un composé hydroxylé choisi parmi les hydroxy-polyesters, les hydroxy-polyethers, les hydroxy-polyoléfines, les hydroxy-polybutadiènes, les hydroxy-polycarbonates et les hydroxypolyster-amides.

6. Mélange de la revendication 1 à 5, dans lequel ledit prépolymère de polyisocyanate est bloqué ou coiffé par l'ε-caprolactame.

7. Procédé pour préparer les mélanges des revendications 1 à 6, par extrusion d'un mélange contenant les constituants (I), (II), (III) et éventuellement (IV), à des températures de 200 à 330°C.

8. Utilisation des mélanges des revendications 1 à 6 pour fabriquer des articles moulés.